# EUROPÄISCHE PATENTSCHRIFT

(11) **EP 3 371 129 B1**
(45) Veröffentlichungstag und Bekanntmachung des Hinweises auf die Patenterteilung: **16.09.2020**
(21) Anmeldenummer: 16794245.7
(22) Anmeldetag: 03.11.2016
(51) Int. Cl.: C04B 35/106, C04B 35/119, C04B 35/626

(54) **GESINTERTER FEUERFESTER ZIRKONMULLIT-VERBUNDSTOFF, VERFAHREN ZU SEINER HERSTELLUNG UND SEINE VERWENDUNG**
SINTERED ZIRCONIA MULLITE REFRACTORY COMPOSITE MATERIAL, METHOD FOR THE PRODUCTION THEREOF AND USE OF THE SAME
MATÉRIAU COMPOSITE RÉFRACTAIRE FRITTÉ DE MULLITE DE ZIRCONIUM, SON PROCÉDÉ DE FABRICATION ET SON UTILISATION

(30) Priorität: 05.11.2015 DE 102015119053
(43) Veröffentlichungstag der Anmeldung: 12.09.2018
(73) Patentinhaber: IMERTECH SAS, 75015 Paris (FR)
(72) Erfinder: BOUCHETOU, Marie-Laure, 45100 Orleans (FR); JOUBERT, Olivier, 33450 Izon (FR); POIRIER, Jacques, 45750 St Pryvé - St Mesmin (FR); WEISSENBACHER, Michael, 6020 Innsbruck (AT)
(74) Vertreter: Haseltine Lake Kempner LLP
(86) Internationale Anmeldenummer: PCT/EP2016/076495
(87) Internationale Veröffentlichungsnummer: WO 2017/076941

(56) Entgegenhaltungen:
- EP-A1- 0 325 345
- DE-A1- 2 131 442
- NICOLÁS M RENDTORFF ET AL: "A short and long range study of mullite-zirconia-zircon composites", HYPERFINE INTERACTIONS, KLUWER ACADEMIC PUBLISHERS, DO, Bd. 198, Nr. 1 - 3, 21. Juli 2010 (2010-07-21), Seiten 219-228, XP019881862, ISSN: 1572-9540, DOI: 10.1007/S10751-010-0178-3
- VZQUEZ CARBAJAL G I ET AL: "Microstructure and mechanical behavior of aluminazirconiamullite refractory materials", CERAMICS INTERNATIONAL, ELSEVIER, AMSTERDAM, NL, Bd. 38, Nr. 2, 27. September 2011 (2011-09-27), Seiten 1617-1625, XP028341453, ISSN: 0272-8842, DOI: 10.1016/J.CERAMINT.2011.09.051 [gefunden am 2011-10-04]
- RENDTORFF N M ET AL: "Thermal shock resistance and fatigue of ZirconMullite composite materials", CERAMICS INTERNATIONAL, ELSEVIER, AMSTERDAM, NL, Bd. 37, Nr. 4, 25. Januar 2011 (2011-01-25), Seiten 1427-1434, XP028167534, ISSN: 0272-8842, DOI: 10.1016/J.CERAMINT.2011.01.004 [gefunden am 2011-02-01]
- ZANELLI C ET AL: "Phase composition of alumina-mullite-zirconia refractory materials", JOURNAL OF THE EUROPEAN CERAMIC SOCIETY, ELSEVIER SCIENCE PUBLISHERS, BARKING, ESSEX, GB, Bd. 30, Nr. 1, 1. Januar 2010 (2010-01-01) , Seiten 29-35, XP026676654, ISSN: 0955-2219, DOI: 10.1016/J.JEURCERAMSOC.2009.07.016 [gefunden am 2009-08-28]
- RENDTORFF N M ET AL: "Mechanical and fracture properties of zircon-mullite composites obtained by direct sintering", CERAMICS INTERNATIONAL, ELSEVIER, AMSTERDAM, NL, Bd. 35, Nr. 7, 1. September 2009 (2009-09-01), Seiten 2907-2913, XP026282613, ISSN: 0272-8842, DOI: 10.1016/J.CERAMINT.2009.03.040 [gefunden am 2009-04-24]
- RENDTORFF N ET AL: "Mullite-zirconia-zircon composites: Properties and thermal shock resistance", CERAMICS INTERNATIONAL, ELSEVIER, AMSTERDAM, NL, Bd. 35, Nr. 2, 1. März 2009 (2009-03-01), Seiten 779-786, XP025817690, ISSN: 0272-8842, DOI: 10.1016/J.CERAMINT.2008.02.015 [gefunden am 2008-06-28]
- AKSEL C: "The microstructural features of an alumina-mullite-zirconia refractory material corroded by molten glass", CERAMICS INTERNATIONAL, ELSEVIER, AMSTERDAM, NL, Bd. 29, Nr. 3, 1. Januar 2003 (2003-01-01) , Seiten 305-309, XP004410407, ISSN: 0272-8842, DOI: 10.1016/S0272-8842(02)00137-2
- AKSEL C: "The influence of zircon on the mechanical properties and thermal shock behaviour of slip-cast alumina-mullite refractories", MATERIALS LETTERS, NORTH HOLLAND PUBLISHING COMPANY. AMSTERDAM, NL, Bd. 57, Nr. 4, 1. Dezember 2002 (2002-12-01), Seiten 992-997, XP004392533, ISSN: 0167-577X, DOI: 10.1016/S0167-577X(02)00912-6
- C. AKSEL ET AL: "The Corrosion Resistance of Alumina-Mullite-Zircon Refractories in Molten Glass", KEY ENGINEERING MATERIALS, Bd. 264-268, 1. Januar 2004 (2004-01-01), Seiten 1803-1806, XP55338429, DOI: 10.4028/www.scientific.net/KEM.264-268.180 3
- C. AKSEL: "Thermal Shock Behaviour of Alumina-Mullite-Zircon Refractories", KEY ENGINEERING MATERIALS, Bd. 264-268, 1. Januar 2004 (2004-01-01), Seiten 1747-1750, XP55338436, DOI: 10.4028/www.scientific.net/KEM.264-268.174 7
- J.S MOYA, M.I. OSENDI: "Effect of ZrO2 (ss) in mullite on the sintering and mechanical properties of mullite / ZrO2 composites", JOURNAL OF MATERIALS SCIENCE LETTERS, 1. Januar 1983 (1983-01-01), Seiten 599-602, XP009193237, Madrid, Spain

## Beschreibung

### GEGENSTAND DER ERFINDUNG

Die vorliegende Erfindung betrifft einen gesinterten feuerfesten Zirkonmullit-Verbundstoff auf Basis von Aluminiumsilikat, Aluminiumoxid und Zirkonsand. Gegenstand der Erfindung ist auch ein Verfahren zur Herstellung gesinterter feuerfester Zirkonmullit-Verbundstoffe und gesinterter Zirkonmullit-Feinkeramik sowie entsprechender, aus den Verbundstoffen hergestellter, gegossener oder gepresster Feuerfesterzeugnisse.

### STAND DER TECHNIK

Feuerfestprodukte werden in großem Umfang bei der Produktion von Eisen, Stahl, Nichteisenmetallen, Zement und Glas sowie für Verbrennungsanlagen, Glasschmelzöfen und ähnliche Vorrichtungen eingesetzt. Aufgrund ihrer hervorragenden Eigenschaften, wie hohe Feuerbeständigkeit, hohe Festigkeit, hohe Bruchzähigkeit, hohe Verschleißfestigkeit, guten Temperaturwechselbeständigkeit und Korrosionsbeständigkeit, werden Zirkonmullit-Verbundstoffe als Rohstoffe für Feuerfestprodukte eingesetzt. Allgemein wird der Ausgangsstoff für Zirkonmullit-Feuerfestprodukte industriell über ein Schmelzverfahren durch Schmelzen einer Mischung von Zirkonsand und Tonerde in einem elektrischen Lichtbogenofen hergestellt. Zirkonmullit wird für Spezialprodukte eingesetzt, wo eine hohe Korrosionsfestigkeit und eine geringe thermische Ausdehnung gefordert sind. Die Anwendungen umfassen keramische Gießrohre und Feuerfestformkörper, die einen hohen Widerstand gegenüber geschmolzenen Schlacken und geschmolzenem Glas erfordern.

Der Rohstoff für Zirkonmullit-Feuerfestprodukte umfasst eine im Wesentlichen aus Zirkondioxid und Mullit bestehende mineralogische Phase, wobei die Zirkondioxid-Kristalle in einer Mullitmatrix dispergiert sind. Typischerweise haben die Kristallpartikel des kristallinen Zirkondioxids in den geschmolzenen Zirkonmullit-Verbundstoffen eine Partikelgröße bis zu 100 µm. Zusätzlich liegt in dem Zirkonmullit-Rohstoff eine Glasphase vor.

Ein Zirkonmullit-Feuerfestverbundstoff mit einer verbesserten Mikrostruktur wird in dem U.S.-Patent Nr. 2010-0298109 A1 beschrieben. Der Ausgangsstoff für Zirkonmullit-Feuerfestprodukte umfasst dabei kristallines Zirkondioxid und Mullit als primäre Komponenten, während der Rest als Korund und/oder Glasmatrix vorliegt, wobei das kristalline Zirkondioxid eutektische Zirkondioxid-Kristalle mit einer Partikelgröße von 1 µm und weniger umfasst und wobei das kristalline Zirkondioxid eine maximale Partikelgröße von 30 µm oder weniger aufweist.

Die Herstellung und die Sintereigenschaften von weiteren Zirkonmullit-Korund-Verbundstoffen werden in Trans. Nonferrous Met. Soc. China 20(10) 2331 - 2335 beschrieben. Die Verbundstoffe werden aus Flugasche, Zirkonsand und Aluminiumoxidpulver durch ein Reaktionsinterverfahren gewonnen. Es werden Materialien erhalten, bei denen die Zirkondioxid-Partikel mit einer Partikelgröße von ca. 5 µm homogen in einer Mullitmatrix verteilt sind.

Das US-Patent Nr. 6,054,402 beschreibt ein wärmedämmendes Bauteil, das aus einer Zusammensetzung gebildet wird, die aus einer Mischung von Zirkondioxid im Bereich von ca. 5 Vol.-% bis ca. 25 Vol.-% und Mullit im Bereich von ca. 75 Vol.-% bis ca. 95 Vol.-% besteht, wobei die Mischung eine homogene Dispersion von Zirkondioxid in Mullit ist, die durch chemische Vermischung von Mullit und Zirkondioxid über einer Sol-Gel-Verfahren erhalten wird.

Häufig werden jedoch mit den bekannten Zirkonmullit-Verbundstoffen bzw. mit den daraus gewonnenen Produkten aufgrund mangelnder Thermoschockbeständigkeit und mangelnder Korrosionsbeständigkeit nicht die gewünschten Standzeiten erreicht. Insbesondere reichen die Leistungen der konventionellen Zirkonmullit-Feuerfestprodukte in Bezug auf ihre Standzeit nicht aus für den Ersatz von Aluminiumoxid/Chromoxid-Feuerfestprodukten, die große Umweltprobleme hervorrufen. Darüber hinaus besteht in der Feuerfestindustrie eine ständige Nachfrage nach verbesserten und günstigeren Verbundstoffen für Feuerfestprodukte. Der Erfindung liegt daher die Aufgabe zugrunde, einen verbesserten korrosionsbeständigen und thermoschockbeständigen Verbundstoff für die Herstellung von Feuerfestprodukten zur Verfügung zu stellen. Es ist ein weiteres Ziel der vorliegenden Erfindung, gleichwertige Feuerfestprodukte für den Ersatz von Aluminiumoxid/Chromoxid-Feuerfestprodukten zur Verfügung zu stellen.

### KURZBESCHREIBUNG DER ERFINDUNG

Gelöst wird die Aufgabe durch einen gesinterten feuerfesten Zirkonmullit-Verbundstoff gemäss Anspruch auf der Basis von Aluminiumsilikat, Aluminiumoxid und Zirkonsand mit einer chemischen Zusammensetzung, die 55% bis 65% Al₂O₃, 15% bis 25% SiO₂, 15% bis 25% ZrO₂ und weniger als 3% rohstoffbedingte Verunreinigungen, jeweils ausgedrückt in Gew.-%, umfasst. Dabei besitzt der feuerfeste Zirkonmullit-Verbundstoff eine mineralogische Zusammensetzung, die 65 Gew.-% bis 85 Gew.-%, vorzugsweise 65 Gew.-% bis 74, Gew.-%, Mullit und 15 Gew.-% bis 35 Gew.-% Zirkondioxid, ebenfalls ausgedrückt in Gew.-%, umfasst. Als Aluminiumsilikat werden Andalusit, Sillimanit und/oder Kyanit eingesetzt.

Der Erfindung liegt die Idee zu Grunde, ausgehend von Andalusit oder anderen Aluminiumsilikaten zusammen mit Aluminiumoxid und Zirkonsand einen im Wesentlichen aus Mullit und Zirkondioxid bestehenden Zirkonmullit-Verbundstoff für die Herstellung von Feuerfesterzeugnissen herzustellen.

Die Rohstoffbasis des feuerfesten Verbundstoffes umfasst daher 25 Gew.-% bis 35 Gew.-% Andalusit, 35 Gew.-% bis 45 Gew.% Aluminiumoxid und 25 Gew.-% bis 35 Gew.-% Zirkonsand. Anstatt Andalusit können jedoch auch Sillimanit, Kyanit oder andere Aluminiumsilikate eingesetzt werden. Auch ist es möglich, die dem Andalusit entsprechenden Anteile direkt als Aluminiumoxid und Siliziumoxid einzusetzen.

Der gesinterte Verbundstoff besitzt eine Mikrostruktur, die im Wesentlichen homogen in einer Mullitmatrix verteilte Zirkondioxidpartikel aufweist, wobei der mittlere Teilchendurchmesser der Zirkondioxidpartikel vorzugsweise weniger als 5 µm, besonders bevorzugt weniger als 2 µm, beträgt.

Aufgrund seiner guten Thermoschockbeständigkeit und Korrosionsbeständigkeit gegenüber Glasschmelzen und geschmolzenen Schlacken ist der erfindungsgemäße Verbundstoff hervorragend als Feuerbeton für die Herstellung von feuerfesten Steinen und gegossenen Feuerfestprodukten geeignet, wobei der Feuerbeton nach dem Sintern in einem Temperaturbereich zwischen 1000 °C und 1700 °C vorzugsweise eine Kaltbiegefestigkeit (KBF), gemessen nach EN 1402-5, von mehr als 80 MPa und eine Kaltdruckfestigkeit (KDF), gemessen nach EN 1402-6, von mehr als 500 MPa aufweist.

Bei mit dem erfindungsgemäßen Verbundstoff hergestellten Feuerfesterzeugnissen handelt es sich vorzugsweise um low-cement Feuerbeton (LCC) mit einem Zementanteil von ca. 5 Gew.-% und besonders bevorzugt um ultra-low-cement Feuerbeton (ULCC) mit einem Zementanteil von weniger als 2 Gew.-%.

Die Herstellung des erfindungsgemäßen gesinterten Zirkonmullit-Verbundstoffes kann nach unterschiedlichen Verfahren erfolgen, die sich nur in einigen wenigen Teilschritten unterscheiden.

Das allgemeine Verfahren zur Herstellung eines gesinterten Zirkonmullit Feuerfest-Verbundstoffes umfasst die Schritte des gleichmäßigen Vermischens feinkörniger Ausgangspulver, der Bildung eines Formkörpers aus der homogenen Mischung der Ausgangspulver, des Sinterns des Formkörpers in einem Temperaturbereich zwischen 1400 °C und 1700 °C und des Zerkleinerns des gesinterten Produktes, um die gewünschte Korngrößenverteilung zu erhalten.

Bei einem vorteilhaften Verfahren zur Herstellung des erfindungsgemäßen gesinterten feuerfesten Zirkonmullit-Verbundstoffes werden zunächst die Rohstoffe durch intensives Mischen homogenisiert. Dabei ist es wichtig, dass feinkörnige Rohstoffe eingesetzt werden. Gegebenenfalls müssen die Rohstoffe vor ihrem Einsatz noch auf eine bestimmte Feinheit vermahlen werden. Zu der so erhaltenen Rohstoffmischung werden beim Nassverfahren 15 Gew.-% bis 45 Gew.-% Wasser und 0.1 Gew.-% bis 1.0 Gew.-% eines Dispergiermittels, jeweils bezogen auf das Gesamtgewicht der Mischung der Ausgangsstoffe, zugegeben. Die Mischung wird homogenisiert, um eine homogene Dispersion zu erhalten, die dann in eine Form eingegossen wird. Das geformte Material wird getrocknet und anschließend wird das getrocknete Material nach dem Entfernen aus der Form in einem Temperaturbereich zwischen 1400 °C und 1700 °C gesintert. Das gesinterte Produkt wird anschließend zerkleinert, um eine gewünschte Korngrößenverteilung zu erhalten.

Bei einem weiteren vorteilhaften Verfahren, dem Trockenverfahren, werden die Rohstoffe in einer Kugelmühle vermahlen, um eine feinkörnige Pulvermischung mit jeweils einer Partikelgröße von weniger als 5 µm zu erhalten. Das feinkörnige Pulver wird homogen vermischt und die erhaltene Pulvermischung wird bei Drücken bis zu 300 MPa kompaktiert, um Presskörper zu erhalten. Wahlweise kann das Pulver vor dem Kompaktieren angefeuchtet werden. Die beim Kompaktieren erhaltenen Presskörper werden wahlweise anschließend zunächst getrocknet und dann in einem Temperaturbereich zwischen 1400 °C und 1700 °C gesintert. Vorzugsweise werden die Pulver jedoch trocken kompaktiert und dann direkt gesintert. Das gesinterte Produkt wird zerkleinert, um die gewünschte Korngrößenverteilung zu erhalten.

Bevorzugt werden als Rohstoffe Andalusit, Aluminiumoxid und Zirkonsand eingesetzt, um eine Mischung mit 25 Gew.-% bis 35 Gew.-% Andalusit, 35 Gew.-% bis 45 Gew.% Aluminiumoxid und 25 Gew.-% bis 35 Gew.-% Zirkonsand zu erhalten, die dann entsprechend weiter verarbeitet wird. Es versteht sich von selbst, dass auch andere Rohstoffe, wie zum Beispiel Sillimanit oder Kyanit, eingesetzt werden können, allerdings ist Andalusit mit Natriumoxid und Kaliumoxid verunreinigt, die während den ersten Stunden der Wärmebehandlung die Umwandlung von Zirkonsand in Zirkonoxid katalysieren.

### KURZBESCHREIBUNG DER ABBILDUNGEN

Die vorliegende Erfindung wird anhand der folgenden Abbildungen zusätzlich erläutert:
- Figur 1: zeigt eine graphische Darstellung der Druckfestigkeit bei hohen Temperaturen,
- Figur 2: zeigt eine graphische Darstellung der Temperaturwechselbeständigkeit von Feuerfeststeinen,
- Figur 3: zeigt eine graphische Darstellung der Temperaturwechselbeständigkeit eines erfindungsgemäßen Verbundstoffes, und
- Figur 4: eine rasterelektronenmikroskopische Aufnahme eines Schliffbildes in 1500-facher Vergrößerung

### AUSFÜHRLICHE BESCHREIBUNG DER ERFINDUNG

Im Folgenden wird die Erfindung darüber hinaus anhand von Beispielen ausführlich erläutert, ohne dass darin eine Einschränkung zu sehen ist.

### Beispiel 1

Zu Beginn wurden 28.47 Gew.-% Andalusit (m-KF), 39.37 Gew.-% Aluminiumoxid (CT 3000) und 32.16 Gew.-% Zirkonsand homogen miteinander vermischt. Zu der Pulvermischung wurden 43 Gew.-% destilliertes Wasser und 0.6 Gew.-% Dispersionsmittel (Darvan C) zugegeben und die so erhaltene Dispersion wurde mit Hilfe eines Rührers für 24 Stunden homogenisiert. Die homogenisierte Dispersion wurde in eine Form gegossen, getrocknet und der erhaltene Festkörper wurde anschließend gesintert. Beim Sintern wurde ein Sinterprogramm gefahren, wobei der Festkörper zunächst innerhalb von 30 Minuten auf 150 °C aufgeheizt wurde, bei dieser Temperatur 30 Minuten lang gehalten und dann innerhalb von 180 Minuten weiter auf 1600 °C aufgeheizt wurde. Das Produkt wurde 24 Stunden bei 1600 °C gesintert und danach innerhalb von 2 Stunden auf Zimmertemperatur gebracht.

Beim Sintern erfolgt die Mullitbildung auf unterschiedliche Weise. Die primäre Mullitbildung ergibt sich durch die Zersetzung des Andalusits (SiO₂-Al₂O₃) in Mullit (2SiO₂·3Al₂O₃) und Siliziumoxid (SiO₂). Die sekundäre Mullitbildung erfolgt durch Reaktion des Aluminiumoxids (Al₂O₃) mit dem Siliziumoxid (SiO₂) aus dem Zirkonsand (ZrSiO₄) und dem überschüssigen Siliziumoxid (SiO₂) aus dem Andalusit (SiO₂·Al₂O₃).

Die Gesamtgleichung lautet:

3 [SiO₂·Al₂O₃] + 3 Al₂O₃ + ZrSiO₄ → 2 [2SiO₂·3Al₂O₃] + ZrO₂

Die Beispiele 2 und 3 wurden auf analoge Weise hergestellt.

Die chemische und mineralogische Zusammensetzung der genannten Beispiele sind in der Tabelle 1 zusammengefasst:

**Tabelle 1**

| Chemische Zusammensetzung (Gew.-%) | Beispiele | | |
|---|---|---|---|
| | 1 | 2 | 3 |
| Al₂O₃ | 58.00 | 58.10 | 56.50 |
| Fe₂O₃ | 0.36 | 0.30 | 0.42 |
| SiO₂ | 21.10 | 21.50 | 20.20 |
| ZrO₂ + HfO₂ | 20.17 | 19.85 | 22.47 |

| Mineralogische Zusammensetzung (Gew.-%) | | | |
|---|---|---|---|
| Mullit | 72 | 69 | 72 |
| Baddeleyit | 19 | 19 | 19 |
| ZrO₂ (tetr. + kub.) | 1 | 1 | 1 |
| Korund | 6 | 6 | 0 |
| Zirkonsand | 0 | 0 | 0 |
| Amorphe Phasen | 2 | 5 | 8 |

Bei der thermischen Behandlung wird der Zirkonsand in kleine Zirkondioxidpartikel mit einer mittleren Partikelgröße von weniger als 5 µm umgewandelt. Mullit agiert als Binder und bildet gleichzeitig die Matrix des Verbundstoffes. Die Umwandlung wird während der ersten Stunden der Wärmebehandlung durch die Anwesenheit von Alkali-Oxiden katalysiert.

### Mechanische Eigenschaften

Um die mechanischen Eigenschaften des Zirkonmullit-Verbundstoffes zu testen, wurden Stäbe zur Bestimmung der Kaltbiegefestigkeit (KBF) und Proben zur Bestimmung der Kaltdruckfestigkeit (KDF) gefertigt. Daneben wurden die Reindichte und die offene Porosität des gesinterten Materials bestimmt. Die mechanischen Eigenschaften sind in der folgenden Tabelle 2 wiedergegeben:

**Tabelle 2**

| Beispiel | Reindichte (g/cm³) | Offene Porosität (%) | KBF (MPa) | KDF (MPa) |
|---|---|---|---|---|
| 1 | 3.32 | < 1 | 88 | 569 |
| 2 | 3.31 | < 1 | 76 | 481 |
| 3 | 3.51 | < 1 | 86 | 292 |

### Test als Standard-Feuerbeton

Der gesinterte feuerfeste Zirkonmullit-Verbundstoff nach Beispiel 1 (SZM) wurde darüber hinaus als Standard-Feuerbeton im Vergleich zu geschmolzenem Zirkonmullit (FZM) getestet. Die Rezeptur für den Standard-Feuerbeton ist in der Tabelle 3 wiedergegeben.

Mit dem Feuerbeton wurden Testkörper für weitere physikalische Untersuchungen gefertigt. Die entsprechenden Testkörper wurden bei 110 °C für 24 Stunden getrocknet und jeweils für 3 Stunden bei 1000 °C bzw. 1500 °C gesintert. Die Sinterzyklen sind in der Tabelle 4 festgehalten. Die physikalischen Eigenschaften der Testkörper sind in der Tabelle 5 zusammengefasst.

**Tabelle 3**

| Rezepturbestandteil | Eigenschaften | Anteile (Gew.-%) |
|---|---|---|
| Zirkonmullit | 3-5 mm | 16 |
| SZM (Beispiel 1) | 1-3 mm | 20 |
| FZM (Vergleich) | 0-1 mm | 24 |
| | 0-0.09 mm | 20 |
| Kalzinierte Tonerde | CT 9 FG | 5 |
| Microsilica | 971 U | 5 |
| Reaktives Aluminiumoxid | RG 4000 | 5 |
| Zement | Secar 71 | 5 |
| **Summe** | | 100 |
| Dispersionsmittel | STPP | 0.15 |

**Tabelle 4**

| Temperaturbereich | Aufheizrate | Temperaturbereich | Aufheizrate |
|---|---|---|---|
| RT - 750°C | 300 °C/h | RT - 1250 °C | 300 °C/h |
| 750°C - 950°C | 120 °C/h | 1250 °C - 1450 °C | 120 °C/h |
| 950°C - 1000°C | 60 °C/h | 1450 °C - 1500 °C | 60 °C/h |
| 1000°C - 1000°C | 3h | 1500 °C - 1500 °C | 3h |
| 1000°C - RT | 720 °C/h | 1500 °C - RT | 720 °C/h |

Wie aus den Ergebnissen in der folgenden Tabelle 5 ersichtlich, besitzen der erfindungsgemäße, gesinterte Zirkonmullit-Verbundstoff (SZM) und der konventionelle, geschmolzene Zirkonmullit (FZM) vergleichbare Eigenschaften. Lediglich die Kaltdruckfestigkeit von SZM bei 1500 °C zeigte einen deutlich höheren Wert. Diese auffallende Abweichung ist Gegenstand weiterer Untersuchungen.

**Tabelle 5**

| Physikalische Eigenschaften | | Zirkonmullit-Verbundstoff | |
|---|---|---|---|
| | | SZM | FZM |
| Wasserbedarf (H₂O) (Gew.-%) | | 5.5 | 5.3 |
| Fließfähigkeit (%) | | 70 | 75 |
| | | | |
| KBF (MPa) | 110°C | 15.8 | 14.3 |
| | 1000°C | 31.7 | 26.2 |
| | 1500°C | 37.4 | 21.9 |
| KDF (MPa) | 110°C | 120 | 143 |
| | 1000°C | 195 | 205 |
| | 1500°C | 186 | 179 |
| Rohdichte (g/cm³) | 110°C | 2.76 | 2.83 |
| | 1000°C | 2.80 | 2.97 |
| | 1500°C | 2.81 | 3.02 |
| Offene Porosität (%) | 110°C | 12.4 | 11.5 |
| | 1000°C | 15.5 | 16.8 |
| | 1500°C | 16.6 | 14.6 |
| irreversible Längenänderung (%) | 1000°C | -0.29 | - 0.32 |
| | 1500°C | - 0.79 | - 0.55 |

### Thermische Eigenschaften

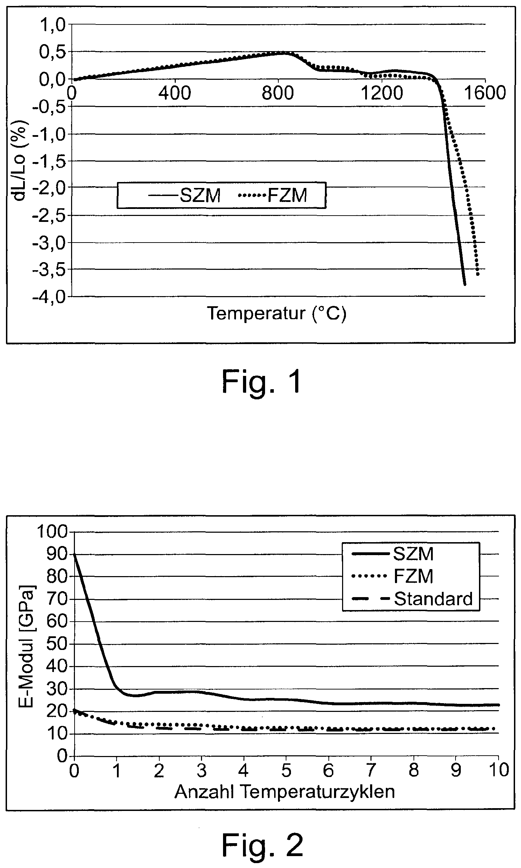

Um eine Vorstellung von den thermischen Eigenschaften der erfindungsgemäßen Verbundstoffe (SZM) zu erhalten, wurde das Druckerweichen bei konstanter Druckbelastung im Vergleich zu geschmolzenem Zirkonmullit (FZM) bestimmt. Die Ergebnisse sind in der Figur 1 wiedergegeben, aus der zu erkennen ist, dass sich das konventionelle geschmolzene und das erfindungsgemäße gesinterte Material vergleichbar verhalten.

### Temperaturwechselbeständigkeit (Feuerfeststeine)

Die Temperaturwechselbeständigkeit des erfindungsgemäßen Zirkonmullit-Verbundstoffes (SZM / Beispiel 1) wurde im Vergleich zu kommerziell erhältlichen geschmolzenen (FZM) und zu kommerziell erhältlichen gesinterten Zirkonmullit-Verbundstoffen (Standard) getestet und ist in der Figur 2 graphisch wiedergegeben. Dabei sind deutliche Unterschiede zwischen dem erfindungsgemäßen Verbundstoff und den kommerziell erhältlichen Materialien zu sehen, die sich aus der unterschiedlichen chemischen und mineralogischen Zusammensetzung erklären lassen.

Der erfindungsgemäße Verbundstoff zeichnet sich durch hohe Anteile an Mullit aus, während die kommerziell erhältlichen Zirkonmullit-Verbundstoffe beide deutlich geringere Anteile an Mullit aufweisen. Die Phasenverteilung der einzelnen Verbundstoffe ist in der Tabelle 6 wiedergegeben:

**Tabelle 6**

| Mineralogische Phase | Zirkonmullit-Verbundstoff | | |
|---|---|---|---|
| | SZM | FZM | Standard |
| Mullit | 74 | 54 | 61 |
| Baddeleyit | 19 | 30 | 33 |
| ZrO₂ (kub. + tetr.) | Spuren | 1 | 1 |
| Korund | 1 | 0 | 1 |
| amorph | 6 | 15 | 4 |

Die Rezeptur zur Herstellung der Feuerfeststeine für die Tests der Temperaturwechselbeständigkeit ist in der Tabelle 7 zusammengefasst.

**Tabelle 7**

| Rezepturbestandteil | Eigenschaften | Anteile (%) |
|---|---|---|
| Ton | | 3.0 |
| reaktive Tonerde | | 8.5 |
| Zirkonsand | | 5.5 |
| Zirkonmullit | 0 - 0.09 mm | 13.0 |
| • SZM | 0 - 1 mm | 40.0 |
| • FZM | | |
| • Standard | 1 - 3 mm | 30.0 |
| Summe | | 100 |
| H₂O | | 4.5 |
| Presshilfsmittel | | 1.0 |

Aus den Ausgangsstoffen wurde eine Suspension hergestellt, die mit Hilfe einer hydraulischen Presse zu Feuerfeststeinen gepresst wurde. Die Steine wurden dann für 5 Stunden bei 1600 °C gesintert. Anschließend wurden die Rohdichte und die offene Porosität der Steine gemessen. Das Sinterprogramm ist in der Tabelle 8 wiedergegeben. Die physikalischen Daten der Steine sind in der Tabelle 9 zusammengefasst.

**Tabelle 8**

| Temperaturbereich | Aufheizrate |
|---|---|
| RT - 1450 °C | 300 °C/h |
| 1450 °C - 1550 °C | 120 °C/h |
| 1550 °C - 1600 °C | 60 °C/h |
| 1600 °C - 1600 °C | 5 h |
| 1600 °C-RT | 720 °C/h |

**Tabelle 9**

| Probe | Rohdichte (g/cm³) | Offene Porosität (%) |
|---|---|---|
| SZM | 2.81 | 16.0 |
| FZM | 3.06 | 16.3 |
| Standard | 3.05 | 17.7 |

Die Temperaturwechselbeständigkeit der Steine wurde durch Aufheizen der Probenkörper auf 950 °C und anschließendes Abkühlen auf Raumtemperatur (RT) mit Hilfe von Pressluft getestet. Die Auswirkungen des Temperaturschocks wurden mit Hilfe der Ultraschall-Transmissionstechnik geprüft, wobei jeweils aus drei Proben der Mittelwert genommen wurde.

In der Figur 2 ist der Verlauf des E-Moduls graphisch wiedergegeben. Der erfindungsgemäße Verbundstoff zeigt für Feuerfeststeine einen großen Abfall des E-Moduls nach dem ersten Temperaturschock und bleibt dann auf hohem Niveau konstant, während die Vergleichsbeispiele zu Beginn einen geringeren Abfall zeigen, wobei der E-Modul jedoch konstant niedriger ist als beim erfindungsgemäßen Verbundstoff.

### Temperaturwechselbeständigkeit (Verbundstoff)

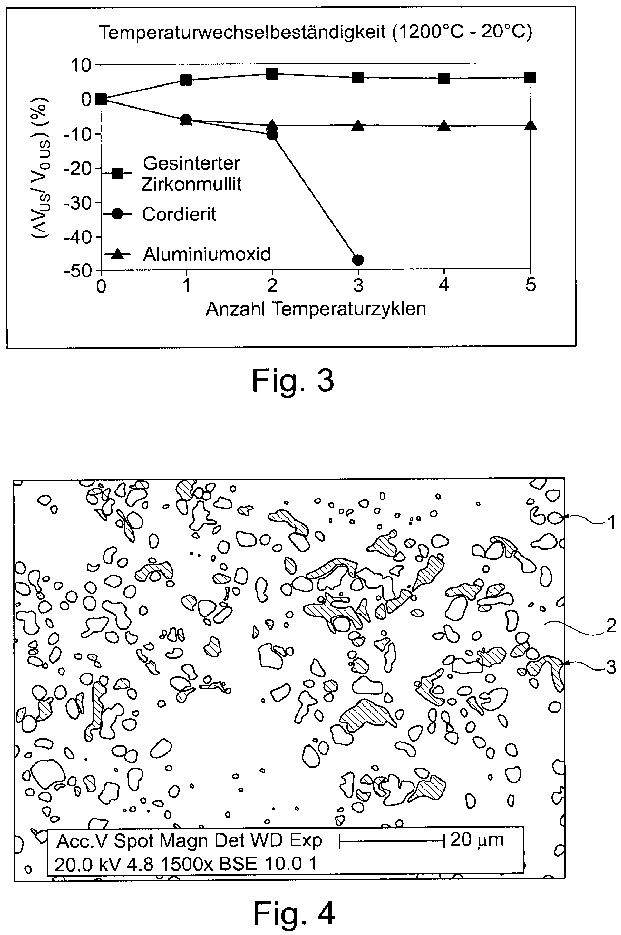

Die Figur 3 zeigt den E-Modul des erfindungsgemäßen Verbundstoffes im Vergleich zu Cordierit und Aluminiumoxid. Die Temperaturwechselbeständigkeit des Verbundstoffes wurde durch langsames Aufheizen der Proben auf 1200 °C und anschließendes Abkühlen auf Zimmertemperatur (RT) mit Hilfe von Pressluft getestet. Die Auswirkungen des Temperaturschocks wurden mit Hilfe der Ultraschall-Transmissionstechnik geprüft. Die Temperaturwechselbeständigkeit des erfindungsgemäßen Verbundstoffes wächst beim ersten und zweiten Temperaturzyklus und bleibt danach konstant, während die Temperaturwechselbeständigkeit des Cordierits nach dem zweiten Zyklus zusammenbricht und die von Aluminiumoxid beim ersten und zweiten Zyklus abfällt und dann bei niedrigem Niveau konstant bleibt.

### Korrosionsbeständigkeit

Darüber hinaus wurde wiederum im Vergleich zu kommerziell erhältlichem geschmolzenem und gesintertem Zirkonmullit die Korrosionsbeständigkeit gegenüber einer Glasschmelze getestet, wozu ebenfalls Feuerfeststeine nach der in Tabelle 7 beschriebenen Rezeptur und dem oben beschriebenen Verfahren hergestellt wurden. In die fertigen Steine wurde jeweils ein zwei Zentimeter tiefes Loch mit einem Durchmesser von einem Zentimeter gebohrt, das mit fein gemahlenem Glas gefüllt wurde. Die mit Glas gefüllten Steine wurden in einem Ofen 10 Stunden bei 1350 °C getempert. Nach dem Abkühlen wurden die Steine mit einem Längsschnitt durch die Mitte der Bohrung aufgeschnitten und unter dem Rasterelektronenmikroskop untersucht, um die Infiltration des Steins zu bestimmen. Dabei wurde gefunden, dass die Glasschmelze am tiefsten in den Feuerfeststein aus geschmolzenem Zirkonmullit eingedrungen war, während bei den beiden Steinen aus gesintertem Zirkonmullit eine vergleichbare, sehr geringe Eindringtiefe und damit eine hohe Korrosionsbeständigkeit gemessen wurde, wobei der Stein aus dem erfindungsgemäßen Zirkonmullit leichte Vorteile gegenüber dem Standard aufwies.

Die Figur 4 zeigt ein für den erfindungsgemäßen Verbundstoff typisches Gefüge, bei dem die hellen Zirkondioxidkristalle 1 in eine Mullitmatrix 2 (grauer Bereich) eingelagert sind. Bei den dunklen Stellen handelt es sich um Poren 3. Üblicherweise besitzt der gesinterte Verbundstoff eine Mikrostruktur, die im Wesentlichen homogen in einer Mullitmatrix 2 verteilte Zirkondioxidkristalle 1 aufweist, wobei der mittlere Teilchendurchmesser der Zirkondioxidkristalle 1 vorzugsweise weniger als 5 µm, besonders bevorzugt weniger als 2 µm, beträgt. Bei weiteren Versuchen im Rahmen der vorliegenden Arbeiten wurde gefunden, dass durch sorgfältiges Aufmahlen und Verarbeiten der Rohstoffe noch deutlich feinere und homogenere Gefüge mit weniger Poren realisiert werden können.

Zusammenfassend kann festgehalten werden, dass es gelingt, ausgehend von Andalusit oder vergleichbaren anderen Materialien, wie Sillimanit oder Kyanit, als kostengünstigen Rohstoffen, einen hervorragenden Verbundstoff für die Herstellung von Feuerfesterzeugnissen zu erhalten, wobei sich der Verbundstoff insbesondere durch eine hohe Temperaturwechselbeständigkeit und eine hervorragende Korrosionsbeständigkeit auszeichnet.

## Patentansprüche

1. Gesinterter feuerfester Zirkonmullit-Verbundstoff auf Basis von Aluminiumsilikat, Aluminiumoxid und Zirkonsand mit der folgenden chemischen Zusammensetzung, ausgedrückt in Gew.-%:
- 55% bis 65% Al₂O₃;
- 15% bis 25% SiO₂;
- 15% bis 25% ZrO₂; und
- weniger als 3% rohstoffbedingte Verunreinigungen,
**dadurch gekennzeichnet, dass**
der feuerfeste Zirkonmullit-Verbundstoff eine mineralogische Zusammensetzung aufweist, die 65 Gew.-% bis 85 Gew.-% Mullit und 15 Gew.-% bis 35 Gew.-% Zirkondioxid umfasst, wobei das Aluminiumsilikat Andalusit, Kyanit und/oder Sillimanit umfasst, und wobei die Rohstoffbasis des Verbundstoffes
- 25 Gew.-% bis 35 Gew.-% Andalusit;
- 35 Gew.-% bis 45 Gew.% Aluminiumoxid; und
- 25 Gew.-% bis 35 Gew.-% Zirkonsand
umfasst.

2. Verbundstoff nach Anspruch 1,
**dadurch gekennzeichnet, dass**
der Verbundstoff eine Mikrostruktur mit im Wesentlichen homogen in einer Mullitmatrix verteilten Zirkondioxidpartikeln aufweist, wobei der mittlere Teilchendurchmesser der Zirkondioxidpartikel weniger als 5 µm, vorzugsweise weniger als 2 µm, beträgt.

3. Feuerbeton für die Herstellung von Feuerfeststeinen oder gegossenen Feuerfesterzeugnisse, hergestellt unter Verwendung eines feuerfesten Verbundstoffes nach einem der Ansprüche 1 bis 2,
**dadurch gekennzeichnet, dass**
der in einem Temperaturbereich zwischen 1000 °C und 1700 °C gesinterte Feuerbeton eine Kaltbiegefestigkeit (KBF), gemessen nach EN 1402-5, von mehr als 80 MPa und eine Kaltdruckfestigkeit (KDF), gemessen nach EN 1402-6, von mehr als 500 MPa aufweist.

4. Feuerbeton nach Anspruch 3,
**dadurch gekennzeichnet, dass**
der Feuerbeton ein low-cement Feuerbeton (LCC) mit einem Zementanteil von 5 Gew.-% oder ein ultra-low-cement Feuerbeton (ULCC) mit einem Zementanteil von weniger als 2 Gew.-% ist.

5. Verfahren zur Herstellung eines gesinterten feuerfesten Zirkonmullit-Verbundstoffes nach einem der Ansprüche 1 bis 2, wobei das Verfahren die die Schritte umfasst:
- gleichmäßiges Vermischen feinkörniger Ausgangspulver;
- Bildung eines Formkörpers aus der homogenen Mischung der Ausgangspulver,
- Sintern des Formkörpers in einem Temperaturbereich zwischen 1400 °C und 1700 °C, und
- Zerkleinern des gesinterten Produktes, um eine gewünschte Korngrößenverteilung zu erhalten, wobei
die Bildung des Formkörpers die Schritte umfasst:
- Zugabe von 15 Gew.-% bis 50 Gew.% Wasser und 0.1 Gew.-% bis 1.0 Gew.-% eines Dispergiermittels, jeweils bezogen auf das Gesamtgewicht der Mischung der Ausgangsstoffe;
- Homogenisierung der Mischung, um eine homogene Dispersion der feingemahlenen Ausgangspulver zu erhalten;
- Eingießen der homogenen Dispersion in eine Form; und
- Trocknen und anschließendes Sintern des geformten Materials.

6. Verfahren zur Herstellung eines gesinterten feuerfesten Zirkonmullit-Verbundstoffes nach einem der Ansprüche 1 bis 2, wobei das Verfahren die die Schritte umfasst:
- gleichmäßiges Vermischen feinkörniger Ausgangspulver;
- Bildung eines Formkörpers aus der homogenen Mischung der Ausgangspulver,
- Sintern des Formkörpers in einem Temperaturbereich zwischen 1400 °C und 1700 °C, und
- Zerkleinern des gesinterten Produktes, um eine gewünschte Korngrößenverteilung zu erhalten, wobei
die Bildung des Formkörpers die Schritte umfasst:
- Kompaktieren der Pulvermischung bei Drücken bis zu 300 MPa, um Presskörper zu erhalten, wobei wahlweise geringe Mengen an Wasser zugegeben werden;
- wahlweises Trocknen der erhaltenen Presskörper; und
- Sintern der Presskörper.

7. Verfahren nach einem der Ansprüche 5 bis 6,
**dadurch gekennzeichnet, dass**
die feinkörnigen Ausgangspulver 25 Gew.-% bis 35 Gew.-% Andalusit, 35 Gew.-% bis 45 Gew.-% Aluminiumoxid und 25 Gew.-% bis 35 Gew.-% Zirkonsand mit jeweils einer Partikelgröße von weniger als 5 µm umfassen.

## Claims

1. A sintered zirconia mullite refractory composite based on aluminosilicate, alumina and zircon sand, having the following chemical composition, in weight-percent:
- 55% to 65% Al₂O₃;
- 15% to 25% SiO₂;
- 15% to 25% ZrO₂; and
- less than 3% raw material-caused impurities,
**characterised in that**
the zirconia mullite refractory composite has a mineralogical composition comprising 65 wt.-% to 85 wt.-% mullite and 15 wt.-% to 35 wt.-% zirconia, wherein the aluminosilicate comprises andalusite, kyanite, and/or sillimanite, and wherein
the raw material basis of the composite comprises
- 25 wt.-% to 35 wt.-% andalusite;
- 35 wt.-% to 45 wt.-% alumina; and
- 25 wt.-% to 35 wt.-% zircon sand.

2. A composite according to claim 1,
**characterised in that**
the composite has a microstructure having zirconia particles essentially homogeneously distributed in a mullite matrix, wherein the average particle diameter of the zirconia particles is less than 5 µm, preferably less than 2 µm.

3. A refractory castable for producing refractory bricks or refractory cast pieces, produced by means of a refractory composite according to one of claims 1 to 2, **characterised in that**
the refractory castable sintered at a temperature range between 1000°C and 1700°C has a Cold Module of Rupture (CMOR), measured according to EN 1402-5, of more than 80 MPa and a Cold Crushing Strength (CCS), measured according to EN 1402-6, of more than 500 MPa.

4. A refractory castable according to claim 3,
**characterised in that**
the refractory castable is a low cement castable (LCC) having a cement content of 5 wt.-% or an ultra-low cement castable (ULCC) having a cement content of less than 2 wt.-%.

5. A method for manufacturing a sintered zirconia mullite refractory composite of one of claims 1 to 2, the method comprising the steps:
- homogeneously mixing finely ground raw material powders;
- forming a shaped body from the homogeneous mixture of the raw material powders,
- sintering the shaped body at a temperature range between 1400°C and 1700°C, and
- crushing the sintered product to obtain a desired particle size distribution, wherein
the forming of the shaped body comprises the steps:
- adding 15 wt.-% to 50 wt.-% water and 0.1 wt.-% to 1.0 wt.-% of a dispersant, each based of the total weight of the raw material mixture;
- homogenising the mixture to obtain a homogeneous dispersion of finely ground raw material powders;
- casting the homogeneous dispersion into a mould; and
- drying and subsequently sintering the shaped material.

6. A method for manufacturing a sintered zirconia mullite refractory composite of one of claims 1 to 2, the method comprising the steps:
- homogeneously mixing finely ground raw material powders;
- forming a shaped body from the homogeneous mixture of the raw material powders,
- sintering the shaped body at a temperature range between 1400°C and 1700°C, and
- crushing the sintered product to obtain a desired particle size distribution, wherein
the forming of the shaped body comprises the steps:
- compacting the powder mixture at pressures up to 300 MPa to obtain compacts, whereby optionally small amounts of water are added;
- optionally drying the obtained compacts; and
- sintering the compacts.

7. A method according to one of claims 5 to 6,
**characterised in that**
the finely ground raw material powders comprise 25 wt.-% to 35 wt.-% andalusite, 35 wt.-% to 45 wt.-% alumina, and 25 wt.-% to 35 wt.-% zircon sand, each having a particle size of less than 5 µm.

## Revendications

1. Matériau composite réfractaire fritté de mullite de zirconium à base de silicate d'aluminium, d'oxyde d'aluminium et de sable de zircon avec la composition chimique suivante, exprimée en pour cent en poids :
- 55% à 65% Al₂O₃ ;
- 15% à 25% SiO₂ ;
- 15% à 25% ZrO₂ ; et
- moins de 3% polluants dus aux matières premières,
**caractérisé en ce que**
le matériau composite réfractaire de mullite de zirconium a une composition minéralogique qui comprend 65 pour cent en poids à 85 pour cent en poids de mullite et 15 pour cent en poids à 35 pour cent en poids de dioxyde de zirconium, dans lequel
le silicate d'aluminium comprend l'andalusite, la kyanite, et/ou la sillimanite, et dans lequel la base en matières premières du matériau composite comprend
- 25 pour cent en poids à 35 pour cent en poids d'andalusite ;
- 35 pour cent en poids à 45 pour cent en poids d'oxyde d'aluminium ; et
- 25 pour cent en poids à 35 pour cent en poids de sable de zircon.

2. Matériau composite selon la revendication 1,
**caractérisé en ce que**
le matériau composite a une microstructure avec des particules de dioxyde de zirconium dispersées essentiellement de façon homogène dans une matrice de mullite, dans lequel le diamètre des particules de dioxyde de zirconium est moins de 5 µm, de préférence moins de 2 µm.

3. Béton réfractaire pour la production de pierres réfractaires ou de produits réfractaires, produit en utilisant un matériau composite réfractaire de l'une des revendications 1 à 2,
**caractérisé en ce que**
le béton réfractaire fritté dans un intervalle de température entre 1000°C et 1700°C a un module de rupture à froid, mesuré selon EN 14025, de plus de 80 MPa, et une résistance à l'écrasement à froid, mesurée selon EN 14026, de plus de 500 MPa.

4. Béton réfractaire selon la revendication 3,
**caractérisé en ce que**
le béton réfractaire est un béton réfractaire à contenu en ciment réduit (LCC) avec un contenu en ciment de 5 pour cent en poids ou un béton réfractaire à contenu en ciment ultra-réduit (ULCC) avec un contenu en ciment de moins de 2 pour cent en poids.

5. Procédé de production d'un matériau composite réfractaire fritté de mullite de zirconium d'une des revendications 1 à 2, le procédé comprenant les étapes de :
- mélanger homogènement des poudres fines de départ ;
- former un corps formé à partir du mélange homogène des poudres fines de départ ;
- fritter le corps formé dans un intervalle de température entre 1400°C et 1700°C, et
- écraser le produit fritté pour obtenir une distribution de tailles de particules désirée, dans lequel
la formation du corps formé comprend les étapes de :
- ajouter de 15 pour cent en poids à 50 pour cent en poids d'eau et de 0,1 pour cent en poids à 1,0 pour cent en poids d'agent dispersant, chacun à la base du poids total du mélange des matières premières ;
- homogénéiser le mélange pour former une dispersion homogène des poudres de départ finement broyées ;
- couler la dispersion homogène dans un moule ; et
- sécher et ensuite fritter le matériau formé.

6. Procédé de production d'un matériau composite réfractaire fritté de mullite de zirconium d'une des revendications 1 à 2, le procédé comprenant les étapes de :
- mélanger homogènement de poudres fines de départ ;
- former un corps formé à partir du mélange homogène des poudres fines de départ ;
- fritter le corps formé dans un intervalle de température entre 1400°C et 1700°C, et
- écraser le produit fritté pour obtenir une distribution de tailles de particules désirée, dans lequel
la formation du corps formé comprend les étapes de :
- compacter le mélange de poudres à des pressions jusqu'à 300 MPa, pour obtenir des comprimés, où des quantités réduites d'eau sont éventuellement ajoutées ;
- éventuellement sécher les comprimés obtenus ; et
- fritter les comprimés.

7. Procédé selon une des revendications 5 et 6,
**caractérisé en ce que**
les poudres fines de départ comprennent de 25 pour cent en poids à 35 pour cent en poids d'andalusite, de 35 pour cent en poids à 45 pour cent en poids d'oxyde d'aluminium et de 25 pour cent en poids à 35 pour cent en poids de sable de zircon, chacun avec une taille de particules de moins de 5 µm.
